# EUROPÄISCHE PATENTSCHRIFT

(11) **EP 1 202 899 B1**
(45) Veröffentlichungstag und Bekanntmachung des Hinweises auf die Patenterteilung: **21.01.2004**
(21) Anmeldenummer: 00949379.2
(22) Anmeldetag: 20.07.2000
(51) Int. Cl.: B62D 25/16

(54) **FORMKÖRPER FÜR EINE SPRITZWASSERSCHUTZVORRICHTUNG IM BEREICH DER RADABDECKUNG EINES LANDFAHRZEUGS**
MOULDED BODY FOR A SPLASHPROOF PROTECTION DEVICE IN THE AREA OF THE WHEEL COVER OF A LAND VEHICLE
CORPS MOULE POUR UN DISPOSITIF DE PROTECTION CONTRE LES PROJECTIONS D'EAU DANS LA ZONE DE COUVERTURE DES ROUES D'UN VEHICULE

(30) Priorität: 30.07.1999 DE 19936058
(43) Veröffentlichungstag der Anmeldung: 08.05.2002
(73) Patentinhaber: WEGU Gummi- und Kunststoffwerke GmbH & Co. KG, D-34123 Kassel (DE)
(72) Erfinder: MÜLLER, Jens-Thomas, D-34292 Ahnatal (DE); BRILL, Hartmut, D-37242 Bad Sooden-Allendorf (DE)
(74) Vertreter: Patentanwälte Rehberg + Hüppe
(86) Internationale Anmeldenummer: PCT/EP2000/006922
(87) Internationale Veröffentlichungsnummer: WO 2001/008962

(56) Entgegenhaltungen:
- EP-A- 0 899 185
- US-A- 3 341 222
- US-A- 5 277 444

## Beschreibung

Die Erfindung bezieht sich auf einen Formkörper für die Ausbildung einer Spritzwasserschutzvorrichtung im Bereich der Radabdeckung eines Landfahrzeugs, der eine Mehrzahl von Rinnen aufweist, die aneinander angrenzend parallel nebeneinander verlaufen und an ihrem Grund jeweils mit mindestens einer Durchbrechung versehen sind, wobei die Rinnen zu einer ersten Seite des Formkörpers hin offen sind und wobei die Durchbrechungen von dem Grund der Rinnen zu einer zweiten Seite des Formkörpers führen.

Spritzwasserschutzvorrichtungen dienen dazu, das Spritzwasser, das von auf nasser Straße abrollenden Rädern abspritzt, im Bereich der Radabdeckung aufzufangen, um eine Spritzwassernebelbildung neben und hinter dem jeweiligen Rad möglichst weitgehend zu verhindern. Die Qualität einer Spritzwasserschutzvorrichtung bemißt sich nach der relativen Menge des aufgefangenen Spritzwassers relativ zu der Menge des von dem jeweiligen Rad abgespritzen Spritzwassers.

Ein Formkörper der eingangs beschriebenen Art zur Ausbildung einer Spritzwasserschutzvorrichtung ist aus der DE 40 35 854 C2 bekannt. Die Rinnen des Formkörpers weisen eine U-förmige Grundform auf, wobei an dem freien Ende eines Schenkels der Wandung der Rinnen ein hakenförmiger Arm angesetzt ist, der schräg rückwärts in den freien Querschnitt der U-förmigen Grundform der Rinne hineinragt und dann in den von ihm bereits abgedeckten Teilraum der Rinne hinein umgekrümmt ist. Der Arm ist ebenso wie die restlichen Bestandteile der jeweiligen Rinne über die gesamte Längserstreckung der Rinne durchgehend vorgesehen und bildet mit seiner der Öffnung der Rinne zugewandten Fläche eine Spritzwasserlenkfläche aus. Der von ihm abgedeckte Bereich der Rinne, insbesondere derjenige innerhalb seiner hakenförmigen Abkrümmung dienst als Spritzwasserfalle, aus der das Spritzwasser nicht mehr zurück in den Bereich des Rades gelangt, sondern über den Umfang des Rads hinweg hinter das Rad und dort zurück auf die Straße abgeleitet wird. Diese Funktiorisweise wird nur erreicht, wenn der Formkörper mit seiner ersten Seite, d. h. mit der Seite, an der seine U-förmigen Rinne offen sind, dem Rad zugewandt wird. Im hinteren Bereich des Rads sind dabei am Grund der Rinnen Durchbrechungen in dem Formkörper vorgesehen, die zu seiner zweiten Seite führen, um eine Ableitung des Wassers aus den Rinnen nicht nur nach unten sondern auch radial von dem Rad weg nach hinten ermöglichen.

Der bekannte Formkörper weist aufgrund des in den freien Querschnitt der U-förmigen Grundform der Rinnen schräg hineiniragenden Arms und der zwischen dem Arm und der Wandung der Rinnen notwendigerweise verbleibenden Durchgänge und Freiräume eine relativ große Bauhöhe von einigen Zentimetern auf. Dies macht es insbesondere schwierig, eine auf diesem Formkörper aufbauende Spritzwasserschutzvorrichtung nachzurüsten, weil innerhalb der Radabdeckungen von Landfahrzeugen nur ein begrenzter radialer Freiraum zwischen dem Rad und den weiteren Bestandteilen der Radabdeckung zur Verfügung steht. Darüberhinaus kann der bekannte Formkörper mit seinem stark hinterschnittenen Profil nur als Strangmaterial hergestellt werden. Dabei ist es schwierig, eine definierte Krümmung einzuhalten, wie sie für einen bestimmten Bereich der Radabdeckung ideal wäre. Darüberhinaus müssen die Durchbrechungen des Formkörpers am Grund der Rinne nachträglich eingebracht werden, da diese bei der Herstellung des Formkörpers beispielsweise durch Strangextrudieren noch nicht berücksichtigt werden können.

Aus der GB 20 04 823 A sind verschiedene Formkörper für Spritzwasserschutzvorrichtungen bekannt, die eine Mehrzahl von parallel nebeneinander verlaufenden Rinnen aufweisen. Durchbrechungen am Grund dieser Rinnen sind nicht vorgesehen. Statt dessen sind die Rinnen untereinander seitlich beabstandet, wobei der so geschaffene Freiraum zwischen den Rinnen bei einigen Ausführungsform durch auskragende Arme, die an die Wandungen aneinander angrenzender Rinnen angesetzt sind, mit lichtem Abstand überdeckt sind. Weiterhin gibt es sowohl Ausführungsformen, bei denen der Formkörper beim Ausbilden der Spritzwasserschutzvorrichtung mit seiner ersten Seite, zu der die Rinnen hin offen sind, dem Rad zuzuwenden ist, als auch andere Ausführungsformen, bei denen er mit seiner gegenüberliegenden zweiten Seite dem Rad zuzuwenden ist.

Der Erfindung liegt die Aufgabe zugrunde, einen Formkörper der eingangs beschriebenen Art aufzuzeigen, der eine geringe Bauhöhe aufweist und dennoch die Ausbildung von Spritzwasserschutzvorrichtungen mit hoher Wirksamkeit ermöglicht. Gleichzeitig soll dieser Formkörper in Anpassung an den Verlauf verschiedener Radabdeckungen möglichst problemlos mit unterschiedlichen Krümmungen herstellbar sein.

Erfindungsgemäß wird diese Aufgabe dadurch gelöst, daß bei einem Formkörper der eingangs beschriebenen Art der Grund der Rinnen im Bereich der Durchbrechungen sägezahnförmig angehoben ist, wodurch angrenzend an die Durchbrechungen quer zur Längserstreckung der Rinnen verlaufende, in den freien Querschnitt der Rinnen eingreifende Spritzwasserlenkflächen an der zweiten Seite des Formkörpers ausgebildet sind. Bei dem neuen Formkörper werden die Spritzwasserlenkflächen durch einen Teil der Wandung der Grundform der Rinnen ausgebildet, indem der Grund der Rinnen lokal falltürartig bzw. sägezahnförmig angehoben ist. Dabei ergibt sich an der Unterseite des sägezahnförmig angehobenen Teils der Wandung die jeweilige Spritzwasserlenkfläche, während der steil abfallende Teil des Sägezahns offen ist und zumindest teilweise die jeweilige Durchbrechung ausbildet. Durch diese Durchbrechung wird das Spritzwasser von der einen Seite des Formkörpers auf die andere Seite des Formkörpers hindurchgeleitet und gelangt dort in einen an der vollständigen Spritzwasserschutzvorrichtung ausgebildeten Abführkanal. Diese Funktion ist bereits bei einer sehr niedrigen Bauhöhe des Formkörpers realisierbar. Realistisch ist eine Bauhöhe von deutlich unter 2 cm, beispielsweise im Bereich von 7 bis 14 mm. Der sehr einfache Aufbau des Formkörpers, der für die Ausbildung der Spritzwasserlenkflächen auf einen Teil der Wandung der Rinnen zurückgreift, ermöglicht eine Herstellung mit geringem Kostenaufwand.

Bei dem neuen Formkörper können alle Spritzwasserlenkflächen dieselbe Orientierung zur Längserstreckung der Rinnen aufweisen, da diese Orientierung auf die Drehrichtung des Rads und auf den Punkt der Anordnung des Formkörpers innerhalb einer Radabdeckung abzustimmen ist. Über eine gesamte Radabdeckung hinweg kann sich die daraus resultierende optimale Orientierung der Spritzwasserlenkflächen zur Längserstreckung der Rinnen aber durchaus ändern. Es ist auch möglich die innerhalb einer Rinne einander benachbarten oder die in einander benachbarten Rinnen angeordneten Spritzwasserlenkflächen mit entgegengesetzten Orientierungen zu versehen, so daß dann bei dem Einbau des Formkörpers in eine Spritzwasserschutzvorrichtung keine feste Orientierung beachtet werden muß.

Die Spritzwasserlenkflächen an dem neuen Formkörper können eben sein. Es ist aber auch möglich, sie mit einer eindimensionalen oder einer zweidimensionalen Krümmung zu versehen. Eine eindimensionale Krümmung kann sowohl in einer Längsebene als auch in einer Querebene zur Längserstreckung der Rinnen verlaufen. Bei einer zweidimensionalen Krümmung sind Krümmungen in dieser Längsebene und in dieser Querebene vorhanden.

Vorzugsweise ist der freie Querschnitt der Rinnen bei dem neuen Formkörper derart nach oben offen, daß er keine Hinterschneidungen aufweist. Hierdurch wird die Grundform des Formkörpers für seine Herstellung noch weiter vereinfacht.

Insbesondere wenn der Formkörper auch an seiner zweiten Seite keine Hinterschneidungen aufweist, kann der Formkörper in einer einfachen zweiteiligen Spritzgußform als einstückiges Kunststoffspritzgußteil hergestellt werden.

Dabei ist es wiederum möglich, dem Formkörper einen definierten Krümmungsradius zu verleihen, wie er auf einen bestimmten Bereich einer Radabdeckung ideal abgestimmt ist.

Wenn der Formkörper als Spritzgußteil hergestellt wird, kann er auch angesetzte Seitenwandungen und eine über ein oder mehrere Filmscharniere anklappbare Rückwand zur Ausbildung eines Wasserablaufgehäuses aufweisen. Der Formkörper kann so zur Ausbildung eines doppelwandigen Spritzwasserschutzschmutzfängers vorgesehen sein, ohne daß weitere Bauteile hinzugefügt werden müssen. Ein solcher Spritzwasserschutzschmutzfänger kann anstelle eines herkömmlichen Schmutzfängers beispielsweise an die Radabdeckung eines Lastkraftwagens montiert werden. Hierzu notwendige Befestigungslaschen können bereits einstückig an den Formkörper und/oder seine anklappbare Rückwand angesetzt sein.

Die Form der Rinnen bei dem neuen Formkörper kann ganz unterschiedlich sein. So ist eine U-Form möglich, die sich nicht grundsätzlich von der Grundform der Rinnen aus dem Stand der Technik unterscheidet. Bevorzugt ist aber eine halbrunde Form der Rinnen, so daß sich eine relativ niedrigere Bauhöhe ergibt, wobei auf der der offenen Seite der Rinnen gegenüberliegenden zweiten Seite des Formkörpers zumindest kleine v-förmige Rinnen ausgebildet sind, in denen Spritzwasser führbar ist. Derartige zusätzliche Rinnen an der Rückseite des Formkörpers sind noch deutlicher und insbesondere mit größerem Querschnitt vorhanden, wenn die zur ersten Seite des Formkörpers hin offenen Rinnen selbst V-förmige sind: Die Form der Rinnen muß natürlich nicht genau halbrund sein, d.h. einen festen Krümmungsradius aufweisen. Vielmehr reicht es aus, daß die Form der Rinnen abgerundet ist und daß die Breite der Rinnen etwa doppelt so groß ist wie ihre Tiefe, um sie als halbrund zu qualifizieren. Entsprechend sind U-förmige Rinnen weniger breit als ihre doppelte Tiefe. Auch eine rechteckige Form der Rinnen ist grundsätzlich möglich.

Der neue Formkörper ist aber nicht nur bezüglich der Form der Rinnen nicht auf eine einzige Ausführungsform festgelegt. Auch bezüglich der Seite des Formkörpers, die bei einer Spritzwasserschutzvorrichtung dem jeweiligen Rad zugewandt ist, gibt es zwei grundsätzliche Ausführungsmöglichkeiten. Zum einen kann die erste Seite des Formkörpers, an der die Rinnen offen sind, dem jeweiligen Rad zugewandt sein. Zum anderen ist es aber auch möglich, die zweite Seite des Formkörpers, also die den Öffnungen der Rinnen abgewandte Seite dem jeweiligen Rad zuzuwenden. Auch diesbezüglich haben Messungen zur Wirksamkeit der Spritzwasserschutzvorrichtung ergeben, daß sehr hohe Auffangleistungen erreicht werden. Bei Zuwendung der ersten Seite des Formkörpers zu dem jeweiligen Rad können etwaige Rinnen, die zusätzlich an der zweiten Seite des Formkörpers ausgebildet sind, zum Ableiten des Wassers über das jeweilige Rad hinweg ausgenutzt werden. Bei der Zuwendung der zweiten Seite jedes Formkörpers zu dem jeweiligen Rad ist festzustellen, daß diese zusätzlichen Rinnen, obwohl sie offen sind, eingetretenes Spritzwasser zu großen Teilen ebenfalls halten und nach unten zur Straße hin ableiten. Dabei ist zu berücksichtigen, daß durch die Durchbrechungen am Grund der Rinnen auf der gegenüberliegenden Seite nur ein geringer Füllstand der Rinnen auf der zweiten Seite jedes Formkörpers mit Spritzwasser möglich ist. Jede darüberhinausgehende Spritzwassermenge tritt durch die Durchbrechungen auf die hier dem Rad abgewandte erste Seite des Formkörpers über.

Die Erfindung wird im folgenden anhand von Ausführungsbeispielen näher erläutert und beschrieben. Dabei zeigt
- Figur 1: einen Längsschnitt durch einen Bereich des neuen Formkörpers in einer ersten Ausführungsform,
- Figur 2: einen ersten Querschnitt durch einen Bereich des Formkörpers in der Ausführungsform gemäß Figur 1,
- Figur 3: einen zweiten Querschnitt durch einen Bereich des Formkörpers in der Ausführungsform gemäß den Figuren 1 und 2 mit einer gegenüber Figur 2 entgegengesetzten Blickrichtung,
- Figur 4: einen Längsschnitt durch einen Bereich des neuen Formkörpers in einer zweiten Ausführungsform,
- Figur 5: einen Querschnitt durch einen Bereich des Formkörpers in der Ausführungsform gemäß Figur 4,
- Figur 6: eine Seitenansicht eines Bereichs des Formkörpers in der Ausführungsform gemäß den Figuren 4 und 5,
- Figur 7: eine Prinzipskizze zur Funktion des Formkörpers gemäß den Figuren 1 bis 3 in einer ersten Ausführungsform einer Spritzwasserschutzvorrichtung,
- Figur 8: eine Prinzipskizze zur Funktion des Formkörpers gemäß den Figuren 1 bis 3 in einer zweiten Ausführungsform einer Spritzwasserschutzvorrichtung,
- Figur 9: eine Prinzipskizze zur Funktion des neuen Formkörpers in einer weiteren Ausführungsform in einer weiteren Ausführungsform einer Spritzwasserschutzvorrichtung,
- Figur 10: eine Prinzipskizze zur Funktion des neuen Formkörpers in einer weiteren Ausführungsform in einer weiteren Ausführungsform einer Spritzwasserschutzvorrichtung,
- Figur 11: eine Prinzipskizze zur Funktion des Formkörpers in der Ausführungsform gemäß Figur 10 in einer weiteren Ausführungsform einer spritzwasserschutzvorrichtung,
- Figur 12: die Anordnung einer mehrteiligen Spritzwasserschutzvorrichtung im Bereich der Radabdeckung eines Rads,
- Figur 13: eine Unteransicht eines Teils der Spritzwasserschutzvorrichtung gemäß Figur 12 und
- Figur 14: einen Formkörper zur Ausbildung eines Spritzwasserschutzschmutzfängers der Spritzwasserschutzvorrichtung gemäß Figur 12.

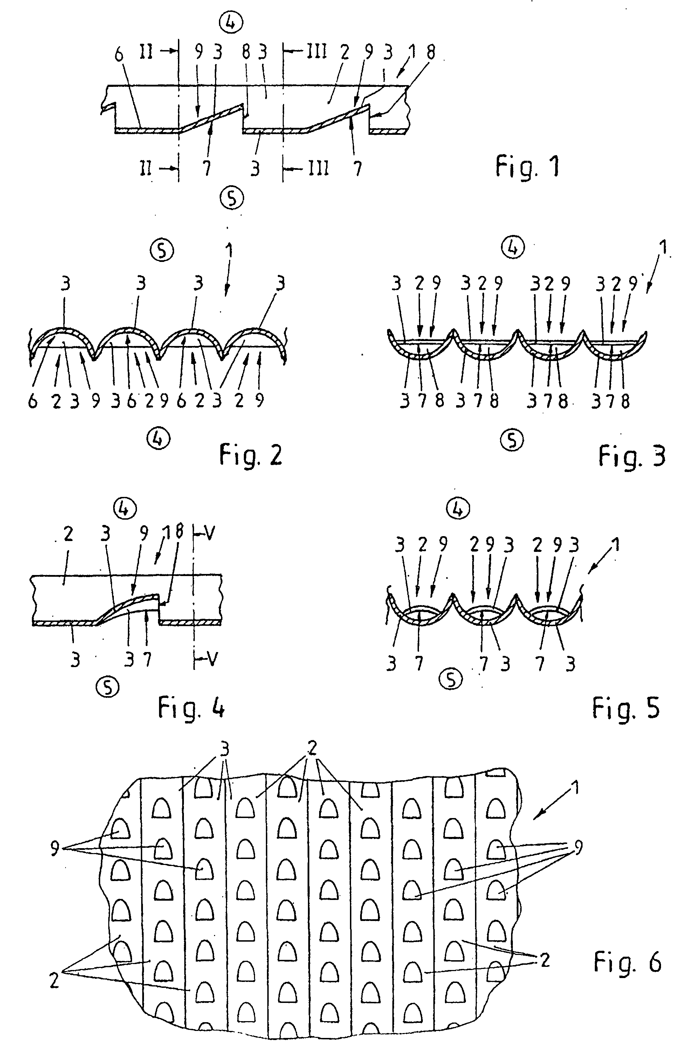

Der in den Figuren 1 bis 3 ausschnittsweise dargestellte Formkörper 1 weist eine Mehrzahl von parallel zueinander verlaufenden und direkt aneinander angrenzenden Rinnen 2 auf. Die Rinnen 2 sind halbkreisförmig und werden jeweils von einer Wandung 3 begrenzt, wobei die freien Enden der Wandungen 3 miteinander verbunden sind. Die Rinnen 2 sind zu einer ersten Seite 4 des Formkörpers 1 hin offen, wobei die Wandungen 3 keinerlei Hinterschneidungen innerhalb der Rinnen aufweisen. Auf der der ersten Seite 4 gegenüberliegenden zweiten Seite 5 des Formkörpers weist die Wandung 3 ebenfalls keine Hinterschneidungen auf. Die Wandung 3 ist jedoch am Grund 6 der Rinnen 2 an untereinander beabstandeten Orten sägezahnförmig bzw. falltürartig angehoben. Hierdurch wird im Bereich jeder Anhebung 9 der Wandung 3 eine Spritzwasserlenkfläche 7 ausgebildet, die an der Seite 5 des Formkörpers 1 angeordnet ist und jeweils an eine Durchbrechung 8 angrenzt. Die Durchbrechungen sind an der Seite 4 des Formkörpers 1 am Grund 6 der jeweiligen Rinne 2 vorgesehen ist und ermöglichen einen freien Durchtritt von der Seite 4 zu der Seite 5 des Formkörpers 1. Bei der Ausführungsform des Formkörpers 1 gemäß den Figuren 1 bis 3 sind die Spritzwasserlenkflächen 7 eben ausgebildet.

Die Ausführungsform des Formkörpers 1 gemäß den Figuren 4 bis 6 unterscheidet sich von derjenigen gemäß den Figuren 1 bis 3 dadurch, daß die Wandungen 3 der Rinnen 2 lokal so angehoben sind, daß die Spritzwasserlenkflächen 7 eine zweidimensionale Krümmung aufweisen, d. h. die Spritzwasserlenkflächen 7 sind sowohl in der Zeichenebene gemäß Figur 4 als auch in der Zeichenebene gemäß Figur 5 gekrümmt. Figur 6 zeigt die Verteilung der Anhebungen der Wandungen 3 der Rinnen 2 in der Haupterstreckungsebene des Formkörpers 1. Dabei sind die Anhebungen 9 in zwei benachbarten Rinnen 2 jeweils versetzt zueinander angeordnet. Bei übernächst benachbarten Rinnen 2 liegen die Anhebungen 9 jeweils auf gleicher Höhe. Es ist aber auch jede andere Verteilung der Anhebungen 9 in der Ebene möglich. Eine möglichst dichte Verteilung der Anhebungen 9 ist wünschenswert, solange die Stabilität des Formkörpers 1 hierdurch nicht beeinträchtigt wird und sich umgekehrt die Wirksamkeit einer auf dem Formkörper 1 aufbauenden Spritzwasserschutzvorrichtung steigern läßt.

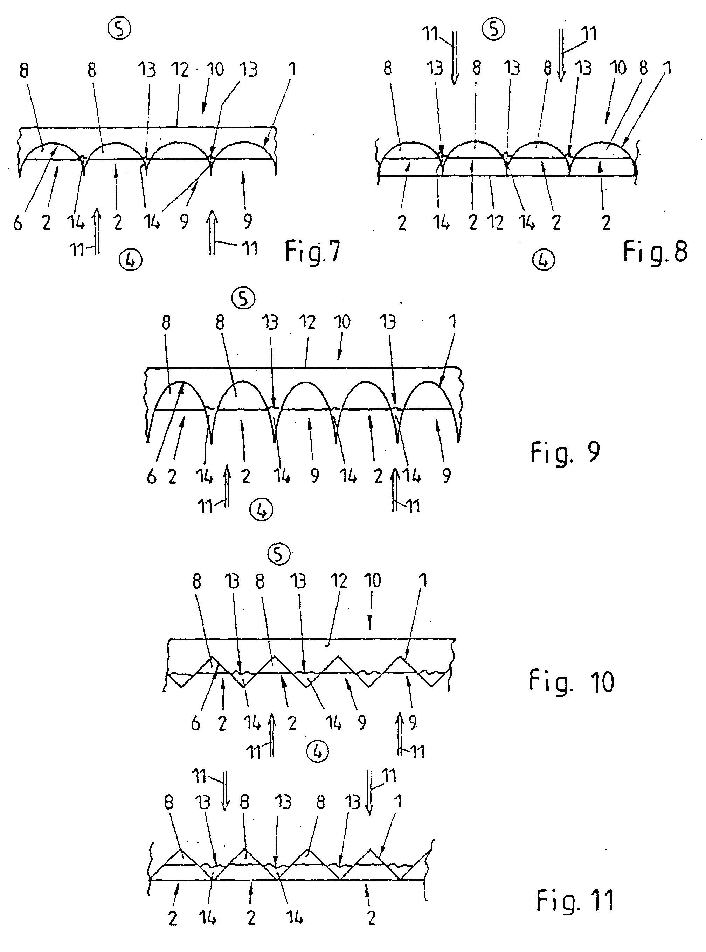

Figur 7 zeigt das Funktionsprinzip einer Spritzwasserschutzvorrichtung 10, bei der der Formkörper 1 gemäß den Figuren 1 bis 3 mit seiner Seite 4 ankommendem Spritzwasser 11 zugewandt ist. Auf der Seite 5 des Formkörpers 1 ist dabei eine Rückwand 12 vorgesehen, die die Spritzwasserschutzvorrichtung 10 hier dichtend abschließt. Das Spritzwasser 11 tritt in die Rinnen 2 ein und kann von dort durch die Durchbrechungen 8 von der Seite 4 auf die Seite 5 übertreten, wobei es durch die Spritzwasserlenkflächen 7 geführt wird. Auf der Seite 5 des Formkörpers 1 wird das Spritzwasser 11 in dem Freiraum zwischen dem Formkörper 1 und der Rückwand 12 senkrecht zur Zeichenebene der Figur abgeleitet. Im Falle einer horizontalen Längserstreckung der Rinnen 2, wobei die Rinnen 2 über einem Rad, von dem das Spritzwasser 11 abspritzt, nach unten gerichtet sind, können in kleinen, v-förmigen Rinnen 13 auf der Seite 5 des Formkörpers 1 Teile 14 des Spritzwassers 11 über das Rad nach hinten abgeleitet werden. Bei der Ausführungsform der Spritzwasserschutzvorrichtung 10 gemäß Figur 8 ist der Formkörper 1 mit umgekehrter Orientierung gegenüber der Rückwand 12 angeordnet. Das heißt, die Rinnen 2 zeigen zu der Rückwand 12, die auf der Seite 4 des Formkörpers 1 vorgesehen ist. Das Spritzwasser 11 kommt dann von der Seite 5 des Formkörpers und kann von dort ebenfalls von den Spritzwasserlenkflächen 7 geführt durch die Durchbrechungen 8 in den Freiraum zwischen dem Formkörper 1 und der Rückwand 12 eintreten. Die Teile 14 des Spritzwassers 11, die hierbei in die v-förmigen Rinnen 13 gelangen, haften aufgrund der spitz zulaufenden Form dieser Rinnen dort fest und kehren beispielsweise nicht als Tropfen zurück auf das Rad. Es ist allerdings zu beachten, daß die Rinnen 13 bereits nach Aufnahme relativ kleiner Spritzwassermengen durch die Durchbrechungen 8 hindurch überlaufen, wobei das Spritzwasser 11 auf die dem Rad hier abgekehrte Seite 4 des Formkörpers 1 gelangt.

Die Ausführungsform der Spritzwasserschutzvorrichtung gemäß Figur 9 unterscheidet sich von derjenigen gemäß Figur 7 nur dadurch, daß ein Formkörper zur Anwendung kommt, dessen Rinnen 2 nicht halbkreisförmig sondern U-förmig sind. Hierdurch können die Durchbrechungen 8 größer, d. h. tiefer gestaltet werden, ohne daß die Stabilität des Formkörpers 1 hierunter leidet. Allerdings wird damit eine größere Bautiefe der gesamten Spritzwasserschutzvorrichtung 10 in Kauf genommen.

Bei der Spritzwasserschutzvorrichtung gemäß Figur 10 kommt wieder ein anderer Formkörper 1 zur Verwendung. Hier sind die Rinnen V-förmig. Hierdurch bilden sich auch auf der der Seite 5, zu der die Rinnen 4 hin geschlossen sind, gleich große V-förmige Rinnen 13 aus, in denen größere Teile 14 des Spritzwassers 11 beispielsweise über das Rad nach hinten weg abgeführt werden können.

Entsprechend sind die dem ankommenden Spritzwasser 11 zugekehrten Rinnen 13 bei der Ausführungsform der Spritzwasserschutzvorrichtung gemäß Figur 11, die sich von der Ausführungsform gemäß Figur 8 nur durch die Orientierung des Formkörpers 1 gemäß Figur 10 unterscheidet, ebenfalls von größerem Querschnitt und zur Aufnahme größerer Teile 14 von Spritzwasser geeignet. Mit zunehmendem Öffnungswinkel der Rinnen 2 bzw. der Rinnen 13 besteht aber die Gefahr, daß bei der Ausführungsform der Spritzwasserschutzvorrichtung 10 gemäß Figur 11 die Teile 14 des Spritzwassers 11 nicht mehr ausreichend in den Rinnen 13 gehalten werden, um beispielsweise ein Zurücktropfen auf das darunter befindliche Rad zu verhindern.

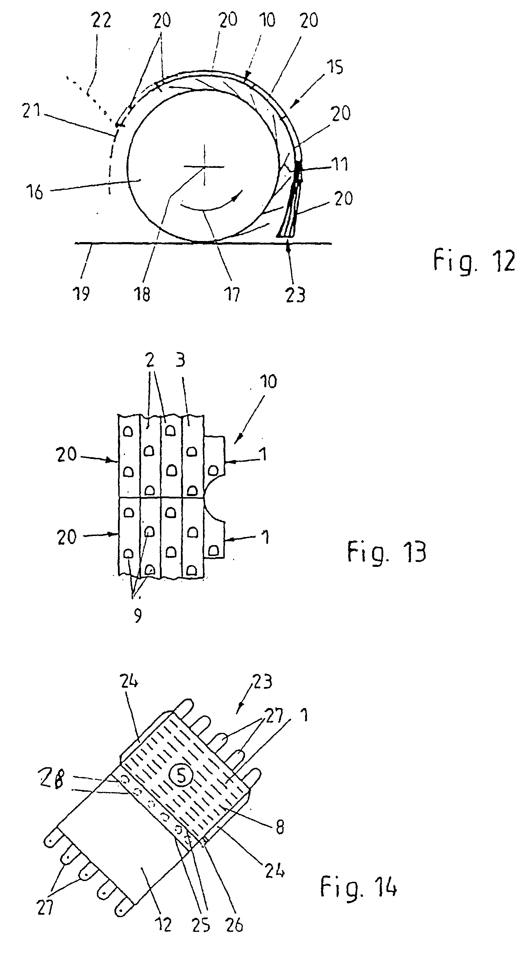

In Figur 12 ist die Anordnung einer Spritzwasserschutzvorrichtung 10 im Bereich der Radabdeckung 15 eines Rads 16 gezeigt, von dem das Spritzwasser 11 abspritzt, wenn das Rad 16 in Richtung eines Pfeils 17 um seine Achse 18 über eine nasse Straße 19 abrollt. Die Spritzwasserschutzvorrichtung 10 ist in einzelne Segmente 20 unterteilt, deren Verlauf bzw. Krümmung dem jeweiligen lokalen Verlauf bzw. der jeweiligen lokalen Krümmung der Radabdeckung 15 entspricht. Hierdurch ist eine genaue Anpassung an den freien Zwischenraum einer vorhandenen Radabdeckung 15 und dem Rad 16 möglich. Die einzelnen Segmente 20 können dabei zusammengesteckt, miteinander verschweißt oder miteinander verklebt sein oder sie verbindende gemeinsame Seitenwandungen aufweisen. Eine gestrichelte Linie 21 deutet den nach vorne fortgesetzten Verlauf der Spritzwasserschutzvorrichtung 10 bzw. der Radabdeckung 15 an, falls das Rad 16 zu einer Einfachachse gehört. Die punktierte Linie 22 entspricht dem Verlauf der Radabdeckung 15 bzw. der Spritzwasserschutzvorrichtung 10 bei einer Doppelachse mit einem weiteren, hier nicht dargestellten Rad in der Zeichenebene von Figur 12, wobei zumindest die Spritzwässerschutzvorrichtung 10 von oben keilförmig zwischen die beiden Räder der Doppelachse vorspringt.

Figur 13 skizziert anhand von zwei Segmenten 20 der Spritzwasserschutzvorrichtung 10 gemäß Figur 12, wie diese in ihrer Haupterstreckungsebene an die vorhandenen Konturen des Freiraums innerhalb einer vorhandenen Radabdeckung 15 angepaßt sein können. Jeder der hierzu notwendigen Formkörper 11 kann mit seinen endgültigen Abmessungen und Ausgestaltungen als Spritzgußteil in einem einzigen Arbeitsschritt hergestellt werden. Das heißt, die Anhebungen 9 der Wandung 3 der Rinnen 2 werden dabei nicht nachträglich angebracht, sondern sind von vornherein vorhanden, ebenso wie die jeweilige Krümmung des Formkörpers 1 für das jeweilige Segment 20 und seine seitlichen Konturen. Die seitlichen Konturen können aber auch nachträglich festgelegt werden, beispielsweise durch Abstanzen, Absägen, Abfräsen, Abschneiden oder anderweitiges Abtrennen des überschüssigen Materials. So kann durch die Bevorratung mit Formkörpern 1 mit unterschiedlicher Krümmung eine große Varianz an hieraus aufzubauenden Spritzwasserschutzvorrichtungen 10 abgedeckt werden.

Figur 14 skizziert, wie zur Ausbildung eines in Figur 12 bereits gezeigten Spritzwasserschutzschmutzfängers 23, der Bestandteil der dort gezeigten Spritzwasserschutzvbrrichtung 10 sein, aber auch allein als Spritzwasserschutzvorrichtung dienen kann, an den Formkörper 1 Seitenwandungen 24 und die Rückwand 12 angespritzt sein können. Dabei sind die Seitenwandungen 24 bezüglich des Formkörpers 1 im wesentlichen starr angeordnet. Hingegen ist die Rückwand 12 über zwei parallele Filmscharniere 25 rückwärtig an den Formkörper 1 anklappbar, so daß ein Wasserablaufgehäuse entsteht, das bis auf eine Ablauföffnung 26 an der unteren Innenseite des Spritzwasserschutzschmutzfängers 23 geschlossen ist. Zusätzliche oder auch alternative Ablauföffnungen 28, die hier gestrichelt angedeutet sind, können an der Unterseite des Wasserablaufgehäuses zwischen den beiden Filmscharnieren 25 vorgesehen sein. Alle Teile des Spritzwasserschutzschmutzfängers 22 sind in einem zweiteiligen Werkstück einstückig aus Kunststoff spritzbar. Dies gilt auch für Befestigungslaschen 27, die sowohl an dem freien Ende des Formkörpers 1 als auch an dem freien Ende der Rückwand 12 vorgesehen sein können.

### BEZUGSZEICHENLISTE

- 1 -: Formkörper
- 2 -: Rinne
- 3 -: Wandung
- 4 -: Seite
- 5 -: Seite
- 6 -: Grund
- 7 -: Spritzwasserlenkfläche
- 8 -: Durchbrechung
- 9 -: Anhebung
- 10 -: Spritzwasserschutzvorrichtung

- 11 -: Spritzwasser
- 12 -: Rückwand
- 13 -: Rinne
- 14 -: Teil des Spritzwassers
- 15 -: Radabdeckung
- 16 -: Rad
- 17 -: Pfeil
- 18 -: Achse
- 19 -: Straße
- 20 -: Segment

- 21 -: Linie
- 22 -: Linie
- 23 -: Spritzwasserschutzschmutzfänger
- 24 -: Seitenwandung
- 25 -: Filmscharnier
- 26 -: Ablauföffnung
- 27 -: Befestigungslasche
- 28 -: Ablauföffnung

## Patentansprüche

1. Formkörper (1) für die Ausbildung einer SpritzwasserschutzVorrichtung (10) im Bereich der Radabdeckung (15) eines Landfahrzeugs, der eine Mehrzahl von Rinnen (13) aufweist, die aneinander angrenzend parallel nebeneinander verlaufen und an ihrem Grund (6) jeweils mit mindestens einer Durchbrechung (8) versehen sind, wobei die Rinnen zu einer ersten Seite (4) des Formkörpers (1) hin offen sind und wobei die Durchbrechungen (8) von dem Grund (6) der Rinnen (2) zu einer zweiten Seite (5) des Formkörpers (1) führen, **dadurch gekennzeichnet, daß** der Grund (6) der Rinnen (2) im Bereich der Durchbrechungen (8) sägezahnförmig angehoben ist, wodurch angrenzend an die Durchbrechungen (8) quer zur Längserstreckung der Rinnen (2) verlaufende, in den freien Querschnitt der Rinnen (2) eingreifende Spritzwasserlenkflächen (7) an der zweiten Seite (5) des Formkörpers (1) ausgebildet sind.

2. Formkörper nach Anspruch 1, **dadurch gekennzeichnet, daß** alle Spritzwasserlenkflächen (7) dieselbe Orientierung zur Längserstreckung der Rinnen (2) aufweisen.

3. Formkörper nach Anspruch 1 oder 2, **dadurch gekennzeichnet, daß** die Spritzwasserlenkflächen (7) eben sind oder eindimensional oder zweidimensional gekrümmt sind.

4. Formkörper nach einem der Ansprüche 1 bis 3 , **dadurch gekennzeichnet, daß** der freie Querschnitt der Rinnen (2) derart nach oben offen ist, daß er keine Hinterschneidungen aufweist.

5. Formkörper nach einem der Ansprüche 1 bis 4, **dadurch gekennzeichnet, daß** der Formkörper (1) an seiner zweiten Seite (5) keine Hinterschneidungen aufweist.

6. Formkörper nach einem der Ansprüche 1 bis 5, **dadurch gekennzeichnet, daß** der Formkörper (1) ein einstückiges Kunststoffspritzgußteil ist.

7. Formkörper nach einem der Ansprüche 1 bis 6, **dadurch gekennzeichnet, daß** der Formkörper (1) einen definierten Krümmungsradius aufweist.

8. Formkörper nach einem der Ansprüche 1 bis 7, **dadurch gekennzeichnet, daß** der Formkörper (1) angesetzte Seitenwandungen (24) und eine über ein oder mehrere Filmscharniere (25) anklappbare Rückwand (12) zur Ausbildung eines Wasserablaufgehäuses aufweist.

9. Formkörper nach einem der Ansprüche 1 bis 8, **dadurch gekennzeichnet, daß** die Rinnen (2) halbrund, U-förmig oder V-förmig sind.

10. Spritzwasserschutzvorrichtung mit einem oder mehreren Formkörpern nach einem der Ansprüche 1 bis 9, **dadurch gekennzeichnet, daß** die zweite Seite (5) jedes Formkörpers (1) dem jeweiligen Rad (26) zugewandt ist.

## Claims

1. A moulded body (1) for forming a splashproof protection device (10) in the area of a wheel cover (15) of a land vehicle, said moulded body having a plurality of channels (13) which run parallel to each other, adjacent to each other and which are each provided with at least one opening (8) in their base (6), the channels being open towards a first side (4) of the moulded body (1), and the openings (8) leading from the base (6) of the channels (2) to a second side (5) of the moulded. body (1), **characterized in that** the base (6) of the channels (2) is raised in the area of the openings (8) in the shape of saw teeth so that, adjacent to the openings (8), splash deflection surfaces (7) are formed at the second side (5) of the moulded body (1) which extend crosswise to the longitudinal extension of the channels (2) and which extend into the free cross section of said channels (2).

2. The moulded body of claim 1, **characterized in that** all splash deflection surfaces (7) have the same orientation with regard to the longitudinal extension of the channels (2).

3. The moulded body according to claim 1 or 2, **characterized in that** the splash deflection surfaces (7) are flat or have a one-dimensional or two-dimensional curvature.

4. The moulded body of any of the claims 1 to 3, **characterized in that** the free cross section of the channels (2) is open to the top **in that** way that there is no undercut.

5. The moulded body of any of the claims 1 to 4, **characterized in that** the moulded body (1) has no undercuts at its second side (5).

6. The moulded body of any of the claims 1 to 5, **characterized in that** the moulded body (1) is a single part injection moulded of plastics.

7. The moulded body of any of the claims 1 to 6, **characterized in that** the moulded body (1) has a defined radius of curvature.

8. The moulded body of any of the claims 1 to 7, **characterized in that** the moulded body (1) has attached side walls (24) and a rear wall (12) which is foldable about one or more film joints (25) to form a water drain housing.

9. The moulded body of any of the claims 1 to 8, **characterized in that** the channels (2) are semi circular or of U-shape or of V-shape.

10. A splashproof protection device having one or more moulded bodies of any of the claims 1 to 9, **characterized in that** the second side (5) of each moulded body (1) is directed towards the respective wheel (26).

## Revendications

1. Corps façonné (1) pour réaliser un dispositif de protection (10) contre les projections d'eau dans la zone du chapeau de roue (15) d'un véhicule terrestre, qui comporte une pluralité de rigoles (13) qui s'étendent côte à côte parallèlement et de manière adjacente les unes aux autres et sont pourvues chacune sur leur fond (6) d'au moins un ajour (8), les rigoles étant ouvertes vers un premier côté (4) du corps façonné (1) et les ajours (8) menant du fond (6) des rigoles (2) à un deuxième côté (5) du corps façonné (1), **caractérisé en ce que** le fond (6) des rigoles (2) est soulevé en forme de dents de scie dans la zone des ajours (8), ce qui fait que des surfaces de guidage des projections d'eau (7) s'étendant adjacentes aux ajours (8), transversalement à l'étendue longitudinale des rigoles (2) et agissant dans la section transversale libre des rigoles (2), sont réalisées sur le deuxième côté (5) du corps façonné (1).

2. Corps façonné selon la revendication 1, **caractérisé en ce que** toutes les surfaces de guidage des projections d'eau (7) présentent la même orientation par rapport à l'étendue longitudinale des rigoles (2).

3. Corps façonné selon la revendication 1 ou 2, **caractérisé en ce que** les surfaces de guidage des projections d'eau (7) sont planes ou courbées suivant une ou deux dimensions.

4. Corps façonné selon l'une des revendications 1 à 3, **caractérisé en ce que** la section transversale libre des rigoles (2) est ouverte vers le haut de manière à ne présenter aucun détalonnage.

5. Corps façonné selon l'une des revendications 1 à 4, **caractérisé en ce que** le corps façonné (1) ne présente aucun détalonnage sur son deuxième côté (5).

6. Corps façonné selon l'une des revendications 1 à 5, **caractérisé en ce que** le corps façonné (1) est une pièce en matière plastique moulée par injection d'un seul tenant.

7. Corps façonné selon l'une des revendications 1 à 6, **caractérisé en ce que** le corps façonné (1) présente un rayon de courbure défini.

8. Corps façonné selon l'une des revendications 1 à 7, **caractérisé en ce que** le corps façonné (1) présente des parois latérales (24) rapportées et une paroi arrière (12) rabattable au moyen d'une ou plusieurs charnières-film (25), pour réaliser un boîtier d'écoulement d'eau.

9. Corps façonné selon l'une des revendications 1 à 8, **caractérisé en ce que** les rigoles (2) sont semi-circulaires, en forme de U ou de V.

10. Dispositif de protection contre les projections d'eau comportant un ou plusieurs corps façonnés selon l'une des revendications 1 à 9, **caractérisé en ce que** le deuxième côté (5) de chaque corps façonné (1) est tourné vers la roue (26) respective.
